# EUROPÄISCHE PATENTANMELDUNG

(11) **EP 1 288 803 A1**
(43) Veröffentlichungstag der Anmeldung: **05.03.2003**
(21) Anmeldenummer: 01120846.9
(22) Anmeldetag: 30.08.2001
(51) Int. Cl.: G06F 17/60

(54) **Teilevertriebssystem, das einen Zentralrechner und eine Mehrzahl von mit dem Zentralrechner vernetzten Händler-Rechnern umfasst**

(71) Anmelder: Bayerische Motoren Werke Aktiengesellschaft, 80809 München (DE)
(72) Erfinder: Hägelsperger, Jürgen, 82377 Penzberg (DE)

(57) **Zusammenfassung**

Bei dem erfindungsgemäßen Teilevertriebssystem, das einen Zentralrechner und eine Mehrzahl von mit dem Zentralrechner vernetzten Händler-Rechnern umfasst, ist im Zentralrechner ein Speicherbereich zur Bereitstellung einer für alle Händler-Rechner zugänglichen zentralen Teileverfügbarkeitsanzeige vorgesehen. Vorzugsweise weist das erfindungsgemäße Teilevertriebssystem im Zentralrechner einen (ersten) Speicherbereich zur Bereitstellung einer für alle Händler-Rechner zugänglichen zentralen Bestandsübersicht und/oder einen (zweiten) Speicherbereich zur Bereitstellung einer für alle Händler-Rechner zugänglichen zentralen Teilebörse auf, wobei die für die zentrale Bestandsübersicht erforderlichen Teiledaten vom Zentralrechner zur Verfügung gestellt werden, der die in die Händler-Rechner eingegebenen Eingänge und Abgänge von Teilen erfasst und/oder wobei wobei die für die zentrale Teilebörse erforderlichen Teiledaten durch die Händler-Rechner in den Speicherbereich des Zentralrechners eingegeben werden. Die zentrale Teileverfügbarkeitsanzeige kann also eine zentrale Bestandsübersicht und/oder eine zentrale Teilebörse sein.

## Beschreibung

Die Erfindung betrifft ein Teilevertriebssystem, das einen Zentralrechner und eine Mehrzahl von mit dem Zentralrechner vernetzten Händler-Rechnern umfasst.

Insbesondere bei Kraftfahrzeug-Händlern werden verschiedene Teilevertriebssysteme und Dispositionsverfahren zur technischen Abwicklung des Teilehandels angewendet. Teilevertriebssysteme bzw. Dispositionsverfahren werden bisher mit einem, auf den einzelnen Händlerbetrieb beschränkten Teilevertrieb-Rechner oder sogenannten Dealer Management System (DMS) durchgeführt. Mit einem Dealer Management Systeme (DMS) kann üblicherweise das komplette Geschäftsspektrum eines Händlers, wie z.B. eines PKW-Händlers, abgebildet werden. Die Teilevertriebs-Funktionalitäten sind jeweils nur ein Modul in einem DMS. In diesem Dealer Management System oder in einem im wesentlichen auf die Teilevertriebs-Funktionalitäten beschränkten Teilevertrieb-Rechner, beide Systeme im ff. kurz Händler-Rechner genannt, laufen alle zur Steuerung der Teilelogistik benötigten Prozesse dezentral und lokal ab.

Durch eine Vernetzung der Händler-Rechner mit einer Zentrale ist bereits eine sog. Teilebörse bekannt, in der nicht mehr benötigte Teile eines Händlers der Zentrale (z.B. zentrale Disposition) angeboten werden können. In diese Teilebörse muss bisher jedes Teil von jedem Händler manuell einund ausgebucht werden. Andere Händler können die Teilebörse nicht direkt abfragen, sondern müssen sich telefonisch an die Zentrale wenden. Bei dieser bekannten Teilebörse leidet sowohl die Aktualität der Teiledaten als auch die Flexibilität der Anwender.

Es ist Aufgabe der Erfindung, ein Teilevertriebssystem zu schaffen, bei dem die Händler optimal über die Verfügbarkeit von Teilen informiert werden und nicht benötigte Teilebestände abbauen können.

Diese Aufgabe wird durch die Merkmale der unabhängigen Patentansprüche gelöst. Vorteilhafte Weiterbildungen der Erfindung sind die Gegenstände der abhängigen Ansprüche.

Bei dem erfindungsgemäßen Teilevertriebssystem, das einen Zentralrechner und eine Mehrzahl von mit dem Zentralrechner vernetzten Händler-Rechnern umfasst, ist im Zentralrechner ein Speicherbereich zur Bereitstellung einer für alle Händler-Rechner zugänglichen zentralen Teileverfügbarkeitsanzeige vorgesehen. Vorzugsweise weist das erfindungsgemäße Teilevertriebssystem im Zentralrechner einen (ersten) Speicherbereich zur Bereitstellung einer für alle Händler-Rechner zugänglichen zentralen Bestandsübersicht und/oder einen (zweiten) Speicherbereich zur Bereitstellung einer für alle Händler-Rechner zugänglichen zentralen Teilebörse auf. Die zentrale Teileverfügbarkeitsanzeige kann also eine zentrale Bestandsübersicht und/oder eine zentrale Teilebörse sein. Dabei kann gezielt nach bestimmten Teilen gesucht werden.

Durch die zentrale Bestandsübersicht sind alle Teilebestände aller Händler anzeigbar. Daher werden die für die zentrale Bestandsübersicht erforderlichen Teiledaten vom Zentralrechner zur Verfügung gestellt. Dazu erfasst dieser die in die Händler-Rechner eingegebenen Eingänge und Abgänge von Teilen.

Durch die zentrale Teilebörse können von den Händlern über die Händler-Rechner nicht (mehr) benötigte Teile angeboten werden. Daher werden die für die zentrale Teilebörse erforderlichen Teiledaten durch die Händler-Rechner in den Zentralrechner eingegeben.

Der Speicherbereich zur Bereitstellung der Bestandsübersicht ist vorteilhafterweise mit dem Speicherbereich zur Bereitstellung der Teilebörse verknüpfbar. Wird beispielsweise mittels eines Händler-Rechners im Zentralrechner-Speicherbereich zur Bereitstellung der Bestandsübersicht nach einem bestimmten Teil gesucht, wird ein entsprechendes Ergebnis der Bestandsübersicht angezeigt. Gleichzeitig kann in der Bestandsübersicht ein Verweis zur Teilebörse angeboten werden, wenn zu dem gesuchten Teil von bestimmten Händlern bzw. Händler-Rechnern Teiledaten zu dem gesuchten Teil eingegeben wurden. Hierdurch kann ein gesuchtes Teil ggf. billiger erworben werden.

Für die zentrale Teilebörse erforderliche Teiledaten können durch die Händler-Rechner aufgrund im Händler-Rechner vorgebbarer Auswahlkriterien automatisch in den Zentralrechner eingegeben werden. Wird ein Teil beispielsweise im Händler-Rechner im Hinblick auf seine "Gängigkeit" kategorisiert, kann ein Teil, das von "hochgängig" auf "ungängig" herabgestuft wurde, automatisch in die Teilebörse eingegeben werden. Weiterhin kann ein Teil automatisch z.B. nach Ablauf einer vorgegebenen Zeit, in die Teilebörse eingegeben oder aus der Teilebörse gelöscht werden.

Für die zentrale Teilebörse erforderliche Teiledaten sind mittels der Händler-Rechner zumindest teilweise auch manuell und individuell eingebbar. Ein Teil kann also entweder automatisch oder manuell in die Teilbörse eingegeben werden. Automatisch in die Teilebörse eingegebene Teile können auch manuell z. B. im Hinblick auf Preis und/oder angebotener Stückzahl verändert werden.

In der Zeichnung ist ein Ausführungsbeispiel der Erfindung zur genaueren Erläuterung dargestellt. Es zeigt:
- Fig. 1: einen Systemüberblick,
- Fig. 2: ein Beispiel für eine Bestandsübersicht,
- Fig. 3: ein Beispiel für eine automatische Teiledaten-Eingabe im Hinblick auf die Teilebörse und
- Fig. 4: ein Beispiel für eine manuelle Teiledaten-Eingabe im Hinblick auf die Teilebörse.

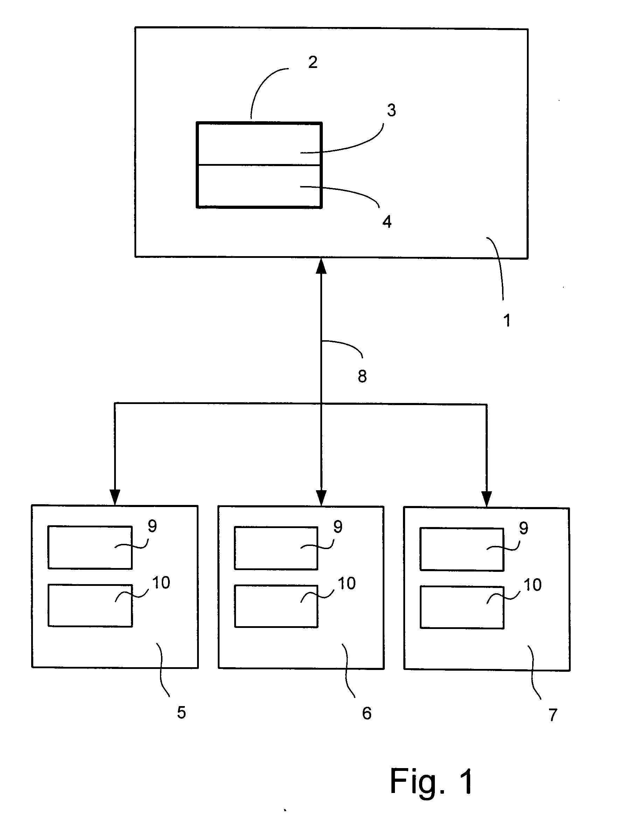

In Fig. 1 sind stellvertretend für eine mögliche Vielzahl von Händler-Rechnern die Händler-Rechner 5, 6 und 7 dargestellt. Die Händler-Rechner 5, 6, 7 sind über ein Netzwerk 8 (z. B. Intranet, Internet) mit dem Zentralrechner 1 verbunden. Der Zentralrechner 1 enthält einen Speicherbereich 2 zur Bereitstellung einer für alle Händler-Rechner 5, 6, 7 zugänglichen zentralen Teileverfügbarkeitsanzeige. Der Speicherbereich 2 setzt sich aus einem ersten Speicherbereich 3 zur Bereitstellung der Bestandsübersicht und einem zweiten Speicherbereich 4 zur Bereitstellung der Teilebörse zusammen.

Die Händler-Rechner 5, 6, 7 enthalten jeweils einen automatischen Teilebörse-Aktualisierungs-Funktionsblock 9 und einen manuellen Teilebörse- Aktualisierungs-Funktionsblock 10. Eingaben in die Teilebörse werden durch jeden Händler-Rechner entweder automatisch über den Funktionsblock 9 oder manuell über den Funktionsblock 10 vorgenommen. Abgänge werden z. B. entweder durch zeitgesteuerte Löschvorgänge über den Funktionsblock 9 automatisch oder durch registrierte Entnahmen von Teilen über den Funktionsblock 10 manuell eingegeben.

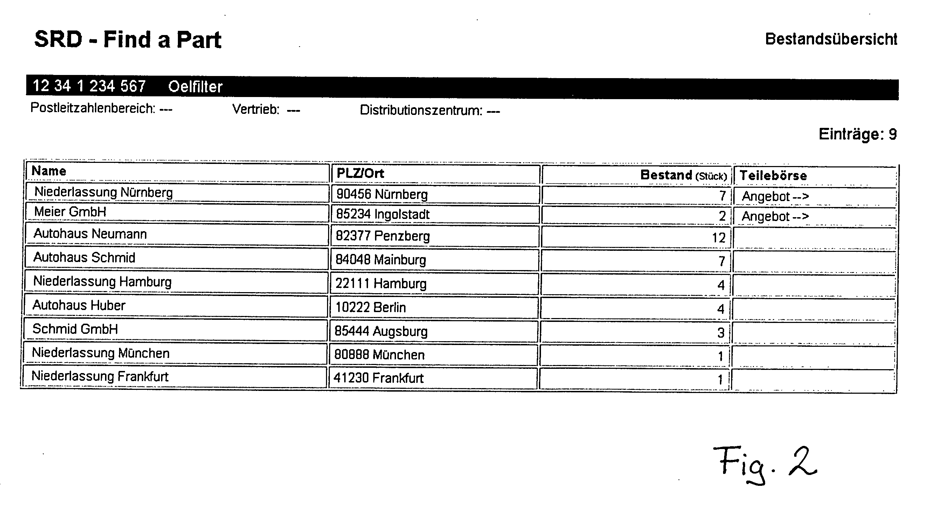

Fig. 2 zeigt das Ergebnis der Bestandsübersicht, nachdem in einem Händler-Rechner 5, 6 7 ein bestimmtes Teil, hier der Ölfilter mit der Teilenummer 12341234567, gesucht wurde. Zunächst werden alle Bestände aller Händler (Niederlassungen, Autohäuser usw.) zu dem gesuchten Teil angezeigt. Im dargestellten Beispiel nach Fig. 2 wird zu den ersten beiden Händlern eine Verknüpfung zur Teilebörse angeboten. Hierüber könnten Teile ggf billiger verfügbar sein. Die Felder "Angebot" können angeklickt werden, um zur entsprechenden Bereitstellung der Teiledaten aus der Teilebörse zu gelangen.

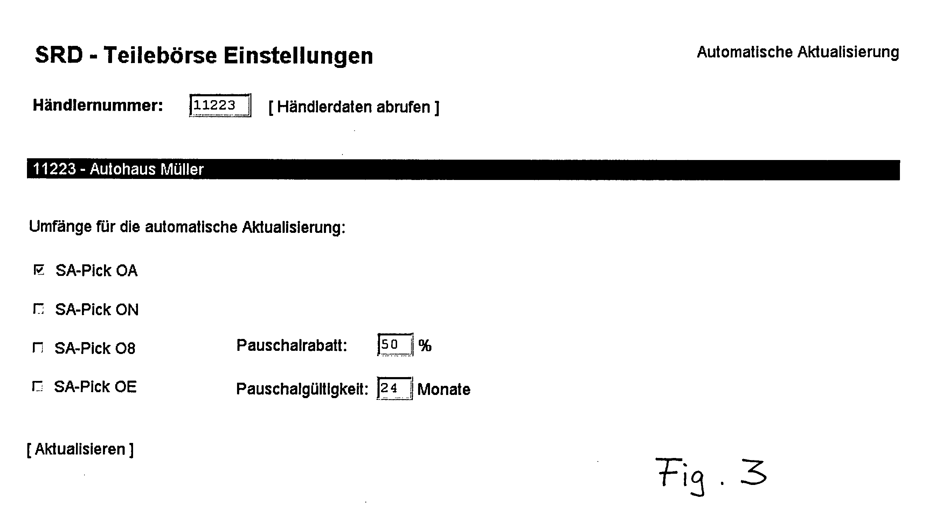

Fig. 3 zeigt Einstellmöglichkeiten im Rahmen des automatischen Teilebörse-Aktualisierungs-Funktionsblocks 9 in einem Händler-Rechner. Hier können die allgemeinen Auswahlkriterien (SA-Pick OA, ...= Teilekategorisierungskürzel, wie z.B. Gängigkeit) eines Händlers eingegeben werden, wonach Teile automatisch in die Teilebörse eingestellt werden sollen. Auch der Preis (hier Pauschalrabatt 50%) und die Gültigkeit des Angebots (hier 24 Monate) in der Teilbörse können hier für alle Teile zentral eingegeben werden.

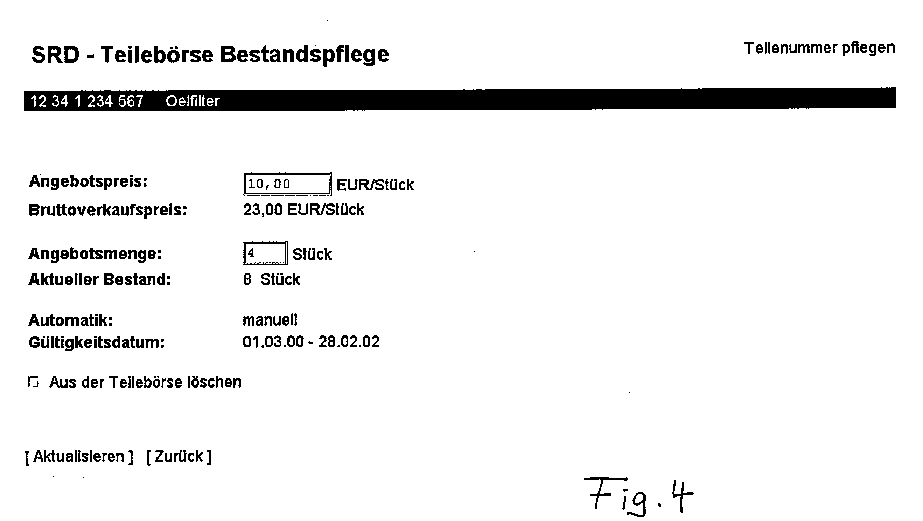

Fig. 4 zeigt Einstellmöglichkeiten im Rahmen des manuellen Teilebörse-Aktualisierungs-Funktionsblocks 10 in einem Händler-Rechner. Hier können manuell oder automatisch eingegebene Teiledaten für ein bestimmtes Teil manuell und individuell eingegeben oder verändert werden. Ist beispielsweise durch den automatischen Teilebörse-Aktualisierungs-Funktionsblocks 9 grundsätzlich ein 50%iger Preisnachlass für alle Teile vorgegeben, kann hier für ein bestimmtes Teil ein abweichender individueller Preis eingegeben werden. Auch die angebotene Stückzahl kann beispielsweise manuell eingegeben werden. Die Stückzahl kann hierbei vom aktuellen Bestand abweichen.

Durch die Erfindung wird dem Händler geholfen, sein Lager von ungängigen Teilen zu befreien. Grundsätzlich wird das Bestandsmanagement verbessert. Im Lager gebundenes Kapital wird freigesetzt. Mit der Bestandübersicht (auch "Find a Part" genannt) hat ein Händler die Möglichkeit, Teile von anderen Händlern zu beziehen, wenn das zugehörige Distributionszentrum gerade nicht liefern kann. Somit wird verhindert, dass in Engpasssituationen Kunden längere Zeit auf ihre Teilebestellungen bzw. Reparaturen warten müssen.

## Patentansprüche

1. Teilevertriebssystem, das einen Zentralrechner und eine Mehrzahl von mit dem Zentralrechner vernetzten Händler-Rechnern umfasst, **dadurch gekennzeichnet, dass** im Zentralrechner (1) ein Speicherbereich (2; 3; 4) zur Bereitstellung einer für alle Händler-Rechner (5,6,7) zugänglichen zentralen Teileverfügbarkeitsanzeige vorgesehen ist.

2. Teilevertriebssystem, das einen Zentralrechner und eine Mehrzahl von mit dem Zentralrechner vernetzten Händler-Rechnern umfasst, **dadurch gekennzeichnet, dass** im Zentralrechner (1) ein Speicherbereich (3) zur Bereitstellung einer für alle Händler-Rechner (5,6,7) zugänglichen zentralen Bestandsübersicht vorgesehen ist, wobei die für die zentrale Bestandsübersicht erforderlichen Teiledaten vom Zentralrechner (1) zur Verfügung gestellt werden, der die in die Händler-Rechner (5,6,7) eingegebenen Eingänge und Abgänge von Teilen erfasst.

3. Teilevertriebssystem, das einen Zentralrechner und eine Mehrzahl von mit dem Zentralrechner vernetzten Händler-Rechnern umfasst, **dadurch gekennzeichnet, dass** im Zentralrechner ein Speicherbereich (4) zur Bereitstellung einer für alle Händler-Rechner (5,6,7) zugänglichen zentralen Teilebörse vorgesehen ist, wobei die für die zentrale Teilebörse erforderlichen Teiledaten durch die Händler-Rechner (5,6,7) in den Speicherbereich (4) des Zentralrechners (1) eingegeben werden.

4. Teilevertriebssystem nach Patentanspruch 2 und 3, **dadurch gekennzeichnet, dass** der Speicherbereich (3) zur Bereitstellung der Bestandsübersicht mit dem Speicherbereich (4) zur Bereitstellung der Teilebörse verknüpfbar ist.

5. Teilevertriebssystem nach Patentanspruch 2, **dadurch gekennzeichnet. dass** für die zentrale Teilebörse erforderliche Teiledaten durch die Händler-Rechner (5,6,7) automatisch aufgrund im Händler-Rechner (5,6,7) vorgebbarer Auswahlkriterien in den Zentralrechner (1) eingebbar sind.

6. Teilevertriebssystem nach Patentanspruch 2 , **dadurch gekennzeichnet. dass** für die zentrale Teilebörse erforderliche Teiledaten mittels der Händler-Rechner (5,6,7) zumindest teilweise manuell und individuell eingebbar sind.
